# EUROPÄISCHE PATENTSCHRIFT

(11) **EP 3 642 005 B1**
(45) Veröffentlichungstag und Bekanntmachung des Hinweises auf die Patenterteilung: **08.09.2021**
(21) Anmeldenummer: 18728143.1
(22) Anmeldetag: 30.05.2018
(51) Int. Cl.: B29C 48/395, B29C 48/54, B29C 48/575, B29C 48/58, B29C 48/605, B29C 48/61, B29C 48/64, B29C 48/67

(54) **EXTRUDERSCHNECKE, EXTRUSIONSVORRICHTUNG MIT EXTRUDERSCHNECKE SOWIE VERFAHREN ZUM PLASTIFIZIEREN EINES KUNSTSTOFFES**
EXTRUDER SCREW, EXTRUSION DEVICE WITH EXTRUDER SCREW AND METHOD FOR PLASTICATING A PLASTIC
VIS D'EXTRUSION, DISPOSITIF D'EXTRUSION DOTÉ D'UNE VIS D'EXTRUSION ET PROCÉDÉ DE PLASTIFICATION D'UNE MATIÈRE PLASTIQUE

(30) Priorität: 22.06.2017 DE 102017113836
(43) Veröffentlichungstag der Anmeldung: 29.04.2020
(73) Patentinhaber: KraussMaffei Extrusion GmbH, 30625 Hannover (DE)
(72) Erfinder: SKRABALA, Otto, 78250 Tengen (DE); ROIDER, Stephan, 82008 Unterhaching (DE)
(74) Vertreter: Krauss, Philipp
(86) Internationale Anmeldenummer: PCT/EP2018/064181
(87) Internationale Veröffentlichungsnummer: WO 2018/233995

(56) Entgegenhaltungen:
- US-A- 4 015 832
- Chris Rauwendaal: "Polymer Extrusion (5th Edition)", 2014, Carl Hanser Verlag, Munich, XP002783544, ISBN: 978-1-56990-516-6 Seite 568 - Seite 570 Seite 604

## Beschreibung

Die Erfindung betrifft eine Extruderschnecke zum Plastifizieren von zumindest einem Kunststoff oder einem Kunststoffgemisch, mit einer Aufschmelzzone, einer Wellenzone (auch als Wave-Zone bezeichnet und somit eine Zone betreffend, die zumindest einen seine Tiefe in Längsrichtung wellenförmig ändernden Fördergang aufweist) sowie einer zwischen der Aufschmelzzone und der Wellenzone, in direktem Anschluss an die Aufschmelzzone angeordneten Mischzone, wobei eine Gangtiefe der Aufschmelzzone entlang der Schneckenlängsachse zu der Mischzone hin kontinuierlich abnimmt und in der Aufschmelzzone sowie in der Wellenzone ein sich helixartig / unter Ausbildung einer Helix entlang einer Schneckenlängsachse erstreckender Fördersteg ausgebildet ist. Des Weiteren betrifft die Erfindung eine Extrusionsvorrichtung mit dieser Extruderschnecke sowie ein Verfahren zum Plastifizieren von zumindest einem Kunststoff oder einem Kunststoffgemisch mittels der Extrusionsvorrichtung.

Aus dem Stand der Technik sind bereits zahlreiche gattungsgemäße Schneckenausbildungen bekannt.

Mit der US 4 173 417 A ist eine Wave-Schnecke beschrieben, bei der eine Kompressionszone (beim konventionellen Aufschmelzen) direkt an eine Wave-Zone anschließt. Auch aus der US 4 405 239 A und der US 6 599 004 B2 sind ähnliche Schnecken bekannt, bei denen sich direkt an eine Kompressionszone eine Wave-Zone anschließt. Diese Schnecken haben den Nachteil, dass der zum Feststoffbett kompaktierte Restfeststoff des Kunststoffes oder Kunststoffgemisches als relativ großer Brocken in die Wave-Zone eintritt. Dadurch kann es vorkommen, dass die Wave-Zone lediglich mit einer relativ geringen Effizienz plastifiziert.

Es gab daher bereits Überlegungen, entsprechende Schnecken umzugestalten, um die Effizienz der Wave-Zone zu erhöhen. In diesem Zusammenhang offenbart die US 6 056 430 A eine Schnecke, bei der zunächst konventionell mit einer Barriereschnecke aufgeschmolzen wird, wobei in einer Metering-Zone der Schnecke eine Wave-Zone platziert ist. Die Stege des Barriereabschnitts gehen dort in die Wave-Zone über. Zwischen der Barrierezone und der Wave-Zone ist eine Übergangszone platziert, bei der die Funktion der beiden Stege umgekehrt wird. Der Barrieresteg wird somit zum Hauptsteg und der Hauptsteg zum Barrieresteg. Dadurch wird erreicht, dass das Feststoffbett, das sich zunächst an der passiven Flanke befindet auf die aktive Flanke der Schnecke verschoben wird. Durch die Verschiebung soll eine höhere Scherung auf das Feststoffbett aufgebaut werden. Eine Durchmischung zwischen dem Feststoff und einer Schmelze des entsprechenden Kunststoffes soll dabei jedoch nicht stattfinden.

Zudem ist aus der US 6 672 753 B1 bekannt, eine Barrierezone mit einer Wave-Zone einer Schnecke zu kombinieren, wobei zwischen diesen eine so genannte Umorientierungs-Zone platziert ist. Auch sind Umorientierungs-Zonen aus der US 7 014 353 B2 und der US 7 156 550 B2 bekannt, wobei stets eine Barrierezone vor der Umorientierungs-Zone platziert ist. Ein Nachteil der mit den jeweiligen Umorientierungs-Zonen versehenen Schnecken kann jedoch ebenfalls darin gesehen werden, dass in manchen Fällen noch keine ausreichend hohe Durchmischung des Restfeststoffes mit der Schmelze vor dem Eintritt in die Wave-Zone vorliegt.

Ebenso ist noch Stand der Technik aus der EP 1 993 807 B1 bekannt, womit offenbart ist, eine mehrgängige Schnecke mit einer Wave-Zone zu kombinieren, wobei die Wave-Zone hinter dem jeweiligen mehrgängigen Aufschmelzbereich angeordnet ist. Als Nachteil ist hierbei jedoch die höhere Gangsteigung in der Mischzone gegenüber den an die Mischzone anschließenden Zonen zu nennen. Dadurch ist ein relativ hoher Platzbedarf bzw. bei gleichem Bauraum eine Effizienzminderung die Folge.

Weiterer Stand der Technik ist aus der US 4 015 832 A bekannt. US 4 015 832 A offenbart den Oberbegriff des Anspruchs 1.

Es ist daher die Aufgabe der vorliegenden Erfindung, die aus dem Stand der Technik bekannten Nachteile zu beheben und insbesondere eine Extruderschnecke zur Verfügung zu stellen, die eine effizientere Plastifizierung des jeweiligen Kunststoffes oder Kunststoffgemisches ermöglicht.

Dies wird nach dem erfindungsgemäßen Gedanken durch die Merkmale des Anspruchs 1 gelöst, wobei der (erste) Fördersteg der Aufschmelzzone an einem der Mischzone zugewandten Ende der Aufschmelzzone endet und der (zweite) Fördersteg der Wellenzone an einem der Mischzone zugewandten Ende beginnt. Somit ist der Fördersteg der Extruderschnecke im Bereich der Mischzone ausgelassen / unterbrochen. Der (erste) Fördersteg der Aufschmelzzone endet unmittelbar zu Beginn der Mischzone. Die Mischzone weist folglich keinen Fördersteg auf. Unter einem Fördersteg ist insbesondere jener helixartig verlaufende Steg der Extruderschnecke bezeichnet, der zum Befördern des Kunststoffes in axialer Richtung entlang der Schneckenlängsachse dient. Folglich weist die Mischzone insbesondere keinen helixartig verlaufenden Fördersteg auf, der einen oder mehrere sich vollständig / um 360° herum erstreckende(-n) Gewindegang(/-gänge) aufweist / ausbildet.

Durch das Weglassen des Fördersteges in der Mischzone kommt es zu einer signifikant besseren Vermischung des Feststoffanteils / Restfeststoffes mit der Schmelze vor Eintritt in die Wellenzone. Dadurch kann in der anschließenden Wellenzone deutlich effektiver plastifiziert werden.

Weitere vorteilhafte Ausführungsformen hinsichtlich des erfindungsgemäßen Gedanken sind mit den Unteransprüchen beansprucht sowie nachfolgend näher erläutert.
Demnach ist es weiterhin vorteilhaft, wenn die Wellenzone im direkten Anschluss an die Mischzone angeordnet ist. Der (zweite) Fördersteg der Wellenzone endet oder beginnt dann unmittelbar am Ende der Mischzone.

Alternativ zu dem unmittelbaren / direkten Übergang der Aufschmelzzone in die Mischzone, ist es jedoch auch vorteilhaft, wenn zwischen der Aufschmelzzone und der Mischzone eine weitere Zone, vorzugsweise eine (z.B. mehrgängige, bevorzugt zweigängige) Metering-Zone, die sich wiederum von der Aufschmelzzone sowie der Mischzone unterscheidet, vorhanden ist. Dadurch wird die Effizienz zum Plastifizieren weiter erhöht.

Des Weiteren ist es in diesem Zusammenhang von Vorteil, wenn die Aufschmelzzone mehrgängig, vorzugsweise mindestens zweigängig, weiter bevorzugt dreigängig ist. Dabei endet(/-en) weiter bevorzugt jeglicher Steg / alle Stege der Aufschmelzzone an dem der Mischzone zugewandten Ende der Aufschmelzzone.

Auch zweckmäßig ist es, wenn die Wellenzone mehrgängig, vorzugsweise zweigängig, ist. Dabei beginnt(/-en) wiederum bevorzugt jeglicher Steg / alle Stege der Wellenzone erst an dem der Mischzone zugewandten Ende der Wellenzone.

Zudem ist es vorteilhaft, wenn die Aufschmelzzone zumindest teilweise oder vollständig als eine Kompressionszone ausgebildet ist.

Hinsichtlich der Aufschmelzzone ist es auch von Vorteil, wenn diese zumindest teilweise oder vollständig als eine (ein- oder mehrgängige) Barrierezone ausgebildet ist, wobei neben dem Fördersteg in der Aufschmelzzone ein Barrieresteg vorhanden ist, der eine geringere radiale Höhe aufweist als der Fördersteg. Dadurch wird die Plastifizierung bereits vor dem Eintritt in die Mischzone weiter gesteigert. Die Barrierezone an sich ist weiter bevorzugt ebenfalls mehrgängig, etwa zweigängig, und somit mit mehreren, vorzugsweise zwei Barrierestegen ausgebildet. Auch die Barrierestege enden dann bevorzugt allesamt an dem der Mischzone zugewandten Ende der Aufschmelzzone / Barrierezone.

Um die Zerkleinerung des in die Mischzone eintretenden Restfeststoffes weiter zu verbessern, ist es auch von Vorteil, wenn die Mischzone zumindest einen eine distributive und/oder disperse Vermischung eines Feststoffanteils mit einem plastifizierten Anteil / Schmelzanteil des zumindest einen Kunststoffes oder Kunststoffgemisches fördernden (distributiven und/oder dispersen) Mischabschnitt aufweist.

In diesem Zusammenhang ist es besonders vorteilhaft, wenn der zumindest eine Mischabschnitt stoffeinteilig / integral mit einem die Mischzone ausbildenden Schneckenabschnitt oder separat / einzeln zu dem die Mischzone ausbildenden Schneckenabschnitt (unter Ausbildung eines separaten Mischelements oder separater Mischelemente) ausgebildet ist. Dadurch sind zahlreiche Möglichkeiten gegeben, um die entsprechende Mischzone individuell an den zu plastifizierenden Kunststoff anzupassen.

Diesbezüglich ist es weiterhin vorteilhaft, wenn der zumindest eine Mischabschnitt als eine Zahnscheibe, eine Lochscheibe, ein Mischstift oder ein Rautenelement ausgebildet ist oder eine oder mehrere längliche / leistenförmige Erhebung(-en) aufweist. Dadurch wird insbesondere die distributive Vermischung in der Mischzone erhöht.

Um die disperse Vermischung zu fördern ist es zudem vorteilhaft, wenn der zumindest eine Mischabschnitt als eine Scherspalte, ein Blisterring oder ein Keilspaltelement / Keilspaltbereich ausgebildet ist.
Die Durchmischung wird weiter verbessert, wenn die Mischzone mehrerer dieser die distributive und/oder disperse Vermischung des Feststoffanteils mit dem plastifizierten Anteil des Kunststoffes fördernden Mischabschnitte aufweist.

Nach einem weiteren Gedanken (nicht beansprucht) kann eine Extruderschnecke zum Plastifizieren von zumindest einem Kunststoff oder einem Kunststoffgemisch eine Aufschmelzzone, eine Wellenzone sowie eine zwischen der Aufschmelzzone und der Wellenzone angeordneten Mischzone aufweisen, wobei die drei Zonen jeweils einen sich helixartig entlang einer Schneckenlängsachse erstreckenden Fördersteg aufweisen und eine Stegsteigung (Schnecken- / Helixsteigung) eines in der Mischzone verlaufenden (dritten) Fördersteges kleiner oder gleich groß wie eine Stegsteigung eines in der Aufschmelzzone und/oder in der Wellenzone verlaufenden (ersten und/oder zweiten) Fördersteges ist, wobei die Aufschmelzzone ausschließlich mit wenigstens einem sich helixartig entlang der Schneckenlängsachse erstreckenden Fördersteg ausgestattet ist, der eine gleichbleibende radiale Höhe aufweist. Die Aufschmelzzone kann ausschließlich mit mehreren (z.B. zwei, drei, vier oder mehr) sich helixartig entlang der Schneckenlängsachse erstreckenden Förderstegen ausgestattet sein, welche Förderstege die gleiche radiale Höhe (zueinander und/oder über deren Länge gesehen) aufweisen. Der oder die Förderstege der Aufschmelzzone können alternativ eine zu der Mischzone hin / stromabwärts kontinuierlich / linear abnehmende Höhe aufweisen. Folglich weist die Aufschmelzzone ausschließlich helixartig verlaufende Förderstege auf, die einen oder mehrere sich vollständig / um 360° herum erstreckende(-n) Gewindegang(/-gänge) ausbilden. Somit ist die Extruderschnecke barrierestegfrei ausgebildet.

Dadurch wird vor der Mischzone eine konventionelle Aufschmelzzone angeordnet und der Aufbau der Extruderschnecke weiter vereinfacht. Durch die Mischzone wird dennoch eine ausreichend effektive Zerkleinerung sowie Vermischung des Feststoffanteils mit dem Schmelzanteil vor Eintritt in die Wellenzone ermöglicht.

Hinsichtlich dieses weiteren nicht beanspruchten Gedankens sei darauf verwiesen, dass dieser auch durch die zuvor beschriebenen vorteilhaften Ausführungsformen hinsichtlich des erfindungsgemäßen Gedankens weitergebildet sein kann.
Weitere vorteilhafte Ausführungsformen hinsichtlich des zweiten Gedankens sind nachfolgend näher erläutert.
Demnach ist es auch vorteilhaft, wenn der (dritte) Fördersteg der Mischzone einen Durchbruch / eine Unterbrechung aufweist. Somit ist der in der Mischzone ausgebildete / verlaufende (dritte) Fördersteg abschnittsweise oder durchgängig ausgebildet. Dadurch wird die Plastifizierung in der Mischzone weiter verbessert.
Ist die Mischzone eingängig ausgestaltet, ist ein besonders geeigneter Kompromiss zwischen einer Förderleistung sowie einer ausreichenden Durchmischung sowie Zerkleinerung realisiert.
Hinsichtlich des erfindungsgemäßen Gedankens sei darauf verwiesen, dass dieser auch durch die zuvor beschriebenen vorteilhaften Ausführungsformen hinsichtlich des zweiten Gedankens weitergebildet sein kann. Es können also die Merkmale und/oder vorteilhaften Ausführungsformen der Extruderschnecke nach dem erfindungsgemäßen Gedanken mit den Merkmalen und/oder vorteilhaften Ausführungsformen der Extruderschnecke nach dem zweiten Gedanken je nach Zweck kombiniert und/oder weitergebildet werden.
Des Weiteren betrifft die Erfindung eine Extrusionsvorrichtung / einen Extruder mit einer erfindungsgemäßen Extruderschnecke gemäß einer der zuvor beschriebenen Ausführungen, d.h. mit einer Extruderschnecke nach dem erfindungsgemäßen Gedanken.

Des Weiteren betrifft die Erfindung ein Verfahren zum Plastifizieren zumindest eines Kunststoffes oder eines Kunststoffgemisches mittels der Extrusionsvorrichtung.

In anderen Worten ausgedrückt, werden durch die erfindungsgemäßen Ausführungen eine bessere Ver- und Zerteilung des Feststoffanteils und eine intensivere Durchmischung mit der Schmelze erreicht, was wiederum den Aufschmelzprozess in der Wave-Zone begünstigt. Dadurch wird in der Wave-Zone bei gleichbleibenden geometrischen Abmessungen mehr Restfeststoff aufgeschmolzen. Die Durchsätze können weiter gesteigert werden, ohne die Baugröße der Maschine vergrößern zu müssen. Eine Durchsatzsteigerung wirkt sich ferner positiv auf die Betriebskosten und auf die Investitionskosten aus, da mit kleineren Maschinen bereits die gewünschte Ausstoßleistung erreicht wird. Zudem ist erwartet, dass die Kombination aus konventionellem Aufschmelzen und dispersem Aufschmelzen (in der Wave-Zone) eine Durchsatzsteigerung ermöglicht, ohne die Austrittstemperatur der Schmelze gravierend zu steigern. Dies wirkt sich wiederum positiv auf die Betriebskosten und auf die Fertigungskosten der jeweiligen extrudierten Produkte aus.

Die Erfindung wird nun nachfolgend anhand von Figuren näher erläutert, in welchem Zusammenhang verschiedene Ausführungsbeispiele zum Veranschaulichen der erfindungsgemäßen Gedanken dargestellt sind.

Es zeigen:

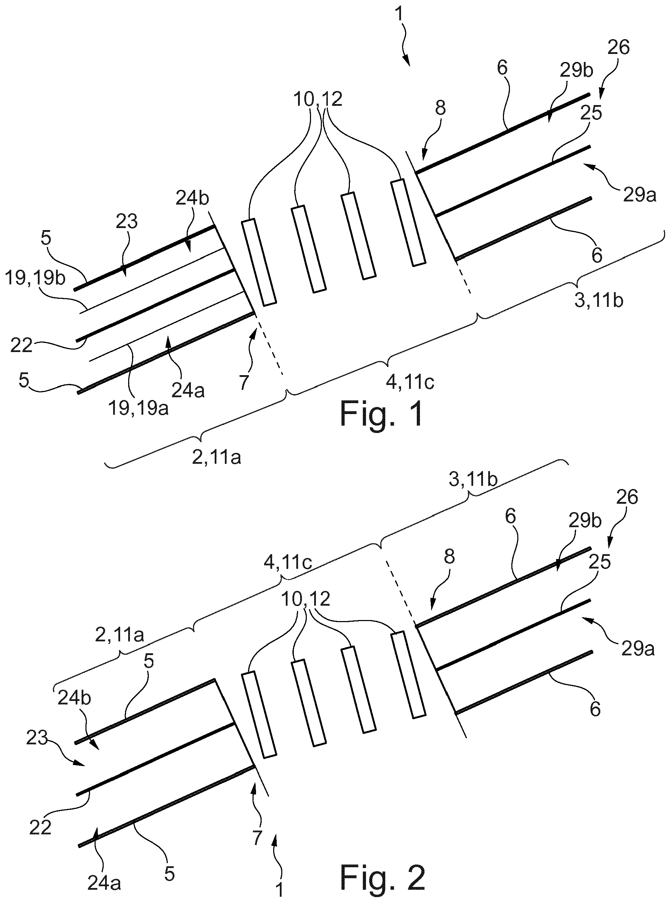

Fig. 1 eine schematische Ansicht eines Abschnittes einer erfindungsgemäßen Extruderschnecke nach einem ersten Ausführungsbeispiel, wobei die Extruderschnecke abgewickelt sowie in liegender Position veranschaulicht ist, und wobei eine Mischzone stegfrei sowie eine Aufschmelzzone als Barrierezone ausgeführt sind,
Fig. 2 eine schematische Ansicht eines Abschnittes einer erfindungsgemäßen Extruderschnecke nach einem zweiten Ausführungsbeispiel, wobei die Extruderschnecke abgewickelt sowie in liegender Position, wie in Fig. 1, veranschaulicht ist, wobei die Aufschmelzzone nun als eine konventionelle Aufschmelzzone ausgebildet ist,

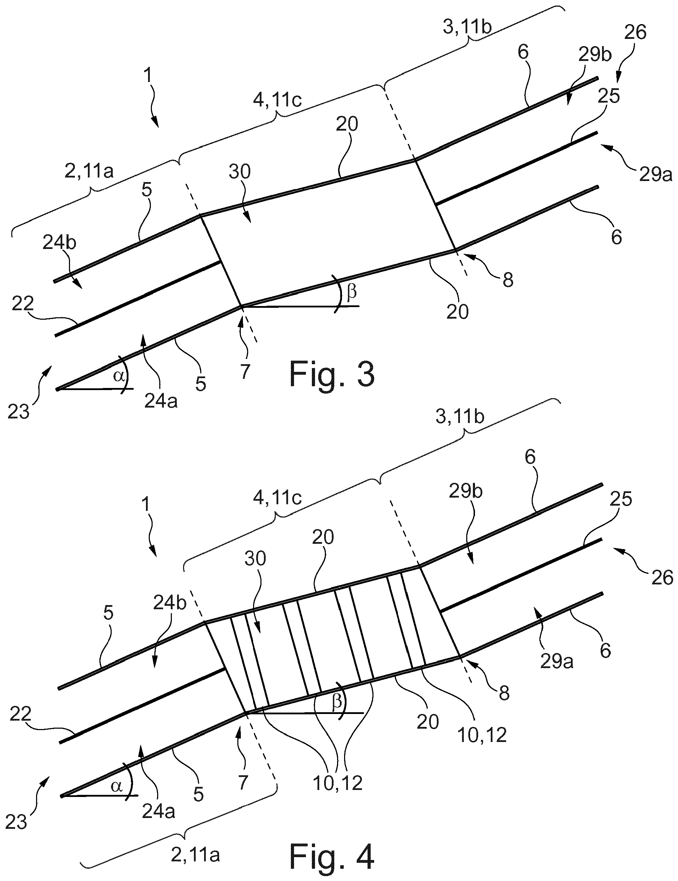

Fig. 3 eine schematische Ansicht eines Abschnittes einer Extruderschnecke nach einem dritten nicht beanspruchten Ausführungsbeispiel, wobei die Extruderschnecke abgewickelt sowie in liegender Position veranschaulicht ist, wobei nun die Mischzone, wie auch die Aufschmelzzone sowie eine Wellenzone, mit einem Fördersteg versehen ist und auf mehrere Mischabschnitte in der Mischzone, wie noch in den Fign. 1 und 2, verzichtet ist,
Fig. 4 eine schematische Ansicht eines Abschnittes einer Extruderschnecke nach einem vierten nicht beanspruchten Ausführungsbeispiel, wobei die Extruderschnecke abgewickelt sowie in liegender Position, wie in Fig. 3, veranschaulicht ist, wobei zusätzlich Mischabschnitte in der Mischzone vorhanden sind,

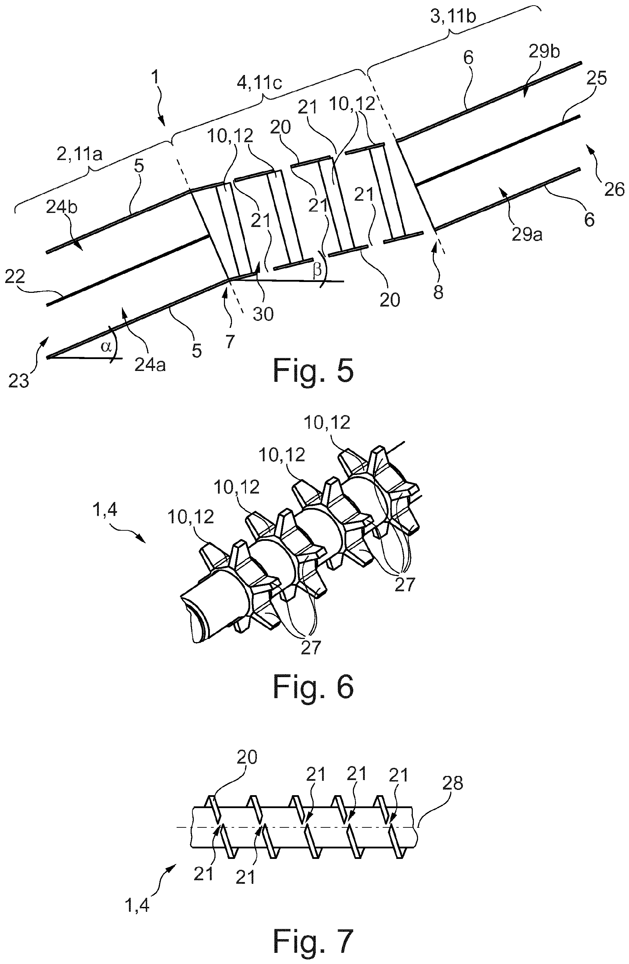

Fig. 5 eine schematische Ansicht eines Abschnittes einer Extruderschnecke nach einem fünften nicht beanspruchten Ausführungsbeispiel, wobei die Extruderschnecke abgewickelt sowie in liegender Position, wie in Fig. 4, veranschaulicht ist, wobei der Fördersteg der Mischzone zusätzlich mit Durchbrüchen versehen ist,
Fig. 6 eine detaillierte perspektivische Darstellung einer in den Fign. 1, 2, 4 und 5 eingesetzten Mischzone mit Mischabschnitten,
Fig. 7 eine Seitendarstellung eines die Mischzone aufweisenden Schneckenabschnittes der Extruderschnecke des fünften Ausführungsbeispiels, womit die Ausbildung der Durchbrüche deutlicher veranschaulicht ist, und

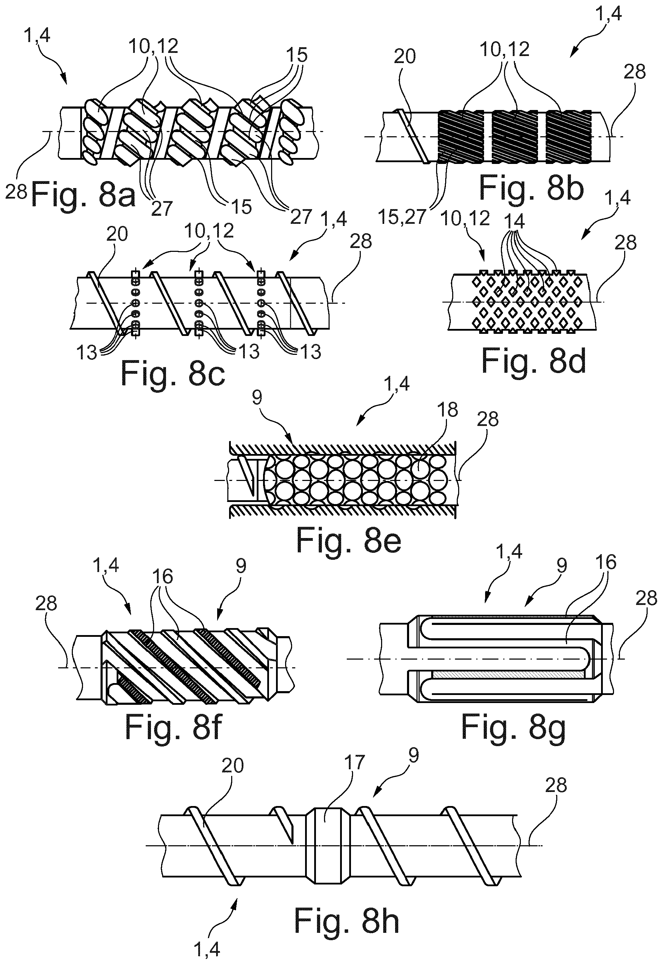

Fign. 8a bis 8h weitere Ausführungsbeispiele hinsichtlich der in den Fign. 1, 2 sowie 4 und 5 einsetzbaren Mischabschnitte.

Die Figuren sind lediglich schematischer Natur und dienen ausschließlich dem Verständnis der Erfindung. Die gleichen Elemente sind mit denselben Bezugszeichen versehen.

In Verbindung mit den Fign. 1 und 2 sind zwei Ausführungsbeispiele abgebildet, die den erfindungsgemäßen Gedanken veranschaulichen. In Verbindung mit den Fign. 3 bis 5 und 7 sind weiterhin drei Ausführungsbeispiele abgebildet, die einen weiteren nicht beanspruchten Gedanken veranschaulichen. Die Ausführungen der Mischabschnitte 9, 10, wie sie in den Fign. 6 und 8a bis 8h veranschaulicht sind, sind prinzipiell auf alle Ausführungsbeispiele, insbesondere die mit den Fign. 1, 2, 4 und 5 veranschaulichten Ausführungsbeispiele, anwendbar. Auch sei darauf hingewiesen, dass die erfindungsgemäßen Extruderschnecken 1 der ersten bis fünften Ausführungsbeispiele prinzipiell gleich ausgebildet sind und funktionieren, weshalb der Kürze wegen nachfolgend in Bezug auf die zweiten bis fünften Ausführungsbeispiele lediglich deren Unterschiede zu dem ersten Ausführungsbeispiel oder untereinander erläutert sind.

Das erste Ausführungsbeispiel ist mit der Fig. 1 veranschaulicht. Die erfindungsgemäße Extruderschnecke 1 ist in einer schematischen, abgewinkelten Darstellung veranschaulicht. Die Extruderschnecke 1 dient auf übliche Weise zum Plastifizieren von zumindest einem Kunststoff / einer Kunststoffkomponente oder von einem Kunststoffgemisch in Form mehrerer Kunststoffkomponenten. Die Extruderschnecke 1 ist auf übliche Weise in ihrem Betrieb in einer Extrusionsvorrichtung / einem Extruder eingesetzt, welche Extrusionsvorrichtung hier der Übersichtlichkeit halber nicht weiter dargestellt ist. Die Extrusionsvorrichtung weist auf typische Weise ein Gehäuse / Extrusionsgehäuse mit einem Einlass und einem Auslass auf. Die Extruderschnecke 1 erstreckt sich mit ihren nachfolgend näher beschriebenen Zonen 2, 3 und 4 zwischen dem Einlass und dem Auslass und ist radial innerhalb einer zylindrischen Wandung des Gehäuses drehbar angeordnet. Mittels dieser Extruderschnecke 1 wird im Betrieb der Extrusionsvorrichtung gemäß einem Herstellverfahren ein Extrusionsbauteil / extrudiertes Bauteil gefertigt, wobei der zumindest eine Kunststoff in fester Form dem Einlass zugeführt, durch die Extruderschnecke 1 plastifiziert und am Auslass schließlich zur Ausbildung des Extrusionsbauteils ausgestoßen wird. Zur Plastifizierung durchtritt der zumindest eine Kunststoff die nachfolgend näher beschriebenen Zonen 2, 3 und 4 der Extruderschnecke 1.

In Fig. 1 ist zu erkennen, dass die drei Zonen 2, 3 und 4 in Form einer Aufschmelzzone 2, einer Mischzone 4 sowie einer Wellenzone 3 ausgebildet sind. Die Mischzone 4 schließt stromabwärts / in Extrusionsrichtung direkt / unmittelbar an die Aufschmelzzone 2 an. Die Wellenzone 3 schließt stromabwärts direkt / unmittelbar an die Mischzone 4 an. Die Aufschmelzzone 2 ist an einem ersten Schneckenabschnitt 11a der Extruderschnecke 1 ausgebildet; die Wellenzone 3 ist an einem zweiten Schneckenabschnitt 11b der Extruderschnecke 1 ausgebildet; die Mischzone 4 ist an einem dritten Schneckenabschnitt 11c der Extruderschnecke 1 ausgebildet. Die drei Schneckenabschnitte 11a, 11b, 11c schließen in axialer Richtung der Extruderschnecke 1 somit unmittelbar aneinander an / gehen unmittelbar ineinander über.

In weiteren Ausführungen ist auch zwischen der Aufschmelzzone 2 und der Mischzone 4 noch eine weitere Zone, etwa eine Metering-Zone, angeordnet. Auch zwischen der Mischzone 4 und der Wellenzone 3 kann prinzipiell eine weitere Zone angeordnet sein. Jeweils zwei unmittelbar aneinander entlang einer gedachten Schneckenlängsachse der Extruderschnecke 1 anschließende Zonen 2, 3, 4 unterscheiden sich insbesondere hinsichtlich der Ausbildung (Stegsteigung) bzw. dem Vorhandensein eines Fördersteges 5, 6.

Sowohl die Aufschmelzzone 2 als auch die Wellenzone 3 weisen jeweils zumindest einen Fördersteg 5, 6 auf. In der Aufschmelzzone 2 ist der Fördersteg als erster Fördersteg 5 bezeichnet. In der Wellenzone 3 ist der Fördersteg als zweiter Fördersteg 6 bezeichnet. Der jeweilige erste und zweite Fördersteg 5, 6 bildet einen Hauptfördersteg aus. Jeder der ersten und zweiten Förderstege 5, 6 erstreckt sich helixartig / helixförmig / schneckenförmig entlang der gedachten Schneckenlängsachse. Somit bilden der erste Fördersteg 5 und der zweite Fördersteg 6 jeweils ein Schneckengewinde an einer radialen Außenseite der Extruderschnecke 1 aus.

Die Aufschmelzzone 2 ist in einer weiteren Ausführung lediglich eingängig ausgebildet. In weiteren Ausführungen ist die Aufschmelzzone 2 mindestens zweigängig, nämlich dreigängig ausgebildet. In diesem ersten Ausführungsbeispiel ist sie jedoch zweigängig ausgebildet. Somit weist die Aufschmelzzone 2 neben dem ersten Fördersteg 5 einen Zwischenfördersteg 22 auf. Zur Veranschaulichung eines in der Aufschmelzzone 2 ausgebildeten (ersten) Förderganges 23 ist der erste Fördersteg 5 zweimal dargestellt. Der Zwischenfördersteg 22 erstreckt sich parallel zu dem sich helixförmig erstreckenden ersten Fördersteg 5, entlang der gedachten Schneckenlängsachse. Der Zwischenfördersteg 22 ist in axialer Richtung (entlang der gedachten Schneckenlängsachse) der Extruderschnecke 1 zwischen zwei Schnecken-/ Gewindegängen des ersten Fördersteges 5 angeordnet. Der durch den ersten Fördersteg 5 gebildete (erste) Fördergang 23 wird durch den Zwischenfördersteg 22 in zwei Teilfördergänge 24a und 24b unterteilt. Der erste Fördersteg 5 sowie der Zwischenfördersteg 22 weisen in radialer Richtung (in Bezug auf die Schneckenlängsachse) gesehen die gleiche Höhe auf.

Die Aufschmelzzone 2 ist in Fig. 1 weiterhin als eine (z.B. zweigängige, nach weiteren Ausführungen als eingängige) Barrierezone ausgestaltet. In axialer Richtung zwischen dem ersten Fördersteg 5 sowie dem Zwischenfördersteg 22 ist ein Barrieresteg 19 angeordnet. Als Barrieresteg 19 ist insbesondere ein Steg zu verstehen, der so bemessen ist, dass er eine Rückströmung an Schmelzanteil und/oder Restfeststoffanteilen zwischen den ersten und zweiten Teilfördergängen 24a und 24b ermöglicht. Im Gegenzug dazu ist unter einem Fördersteg, wie dem ersten Fördersteg 5, jener Steg zu verstehen, der so bemessen ist, dass er eine Rückströmung an Schmelzanteil und/oder Restfeststoffanteilen zwischen den Gewindegängen des jeweiligen Förderganges, wie hier dem ersten Fördergang 23, verhindert / blockiert. Zudem ist zu jeder axialen Seite des Zwischenfördersteges 22 ein Barrieresteg 19; 19a, 19b angeordnet / ausgebildet. Ein erster Barrieresteg 19a ist axial zwischen einem ersten Gewindegang des ersten Fördersteges 5 und dem Zwischenfördersteg 22 und ein zweiter Barrieresteg 19b ist axial zwischen dem Zwischenfördersteg 22 und einem zweiten Gewindegang des ersten Fördersteges 5 angeordnet / ausgebildet. Die Barrierestege 19a und 19b weisen eine geringere radiale Höhe als der erste Fördersteg 5 sowie der Zwischenfördersteg 22 auf. Zudem ist es bevorzugt, dass eine Gangtiefe (Tiefe des ersten Förderganges 23 / der ersten und zweiten Teilfördergänge 24a und 24b) der Aufschmelzzone 2 entlang der Schneckenlängsachse zu der Mischzone 4 hin / stromabwärts kontinuierlich / linear abnimmt. Nicht erfindungsgemäß ist es auch möglich, die Gangtiefe entlang der Schneckenlängsachse abschnittsweise oder vollständig in der Aufschmelzzone 2 / Barrierezone gleich zu lassen. Der Fördersteg 5, der Zwischenfördersteg 22 und/oder die Barrierestege 19a, 19b können eine ebenfalls eine zu der Mischzone 4 hin / stromabwärts kontinuierlich / linear abnehmende Höhe (alternativ eine gleichbleibende radiale Höhe) aufweisen.

In diesem Zusammenhang sei auch auf Fig. 2 verwiesen, wonach gemäß des zweiten bevorzugten Ausführungsbeispiels die Barrierestege 19a, 19b weggelassen sind. In Fig. 2 ist die Aufschmelzzone 2 als eine konventionelle Aufschmelzzone in Form einer Kompressionszone ausgeführt. Die Gangtiefe (Tiefe des ersten Förderganges 23 / der ersten und zweiten 24a und 24b Teilfördergänge) der Aufschmelzzone 2 nimmt ebenfalls entlang der Schneckenlängsachse zu der Mischzone 4 hin / stromabwärts kontinuierlich / linear ab. Auch hier ist es möglich, die Gangtiefe entlang der Schneckenlängsachse abschnittsweise oder vollständig in der Aufschmelzzone 2 / Kompressionszone gleich zu lassen.

Zurückkommend auf das erste Ausführungsbeispiel nach Fig. 1 sei darauf hingewiesen, dass die Wellenzone 3 als eine übliche disperse Plastifizierungs- / Aufschmelzzone ausgebildet ist. Die Wellenzone 3 ist in einer weiteren Ausführung lediglich eingängig ausgebildet, in diesem ersten Ausführungsbeispiel ist sie jedoch zweigängig ausgebildet. Die Wellenzone 3 ist ebenfalls mit einem (zweiten) Zwischenfördersteg 25 ausgestattet, der wiederum zwischen zwei axial aufeinander folgenden Gewindegängen des (zweiten) Fördersteges 6 der Wellenzone 3 angeordnet ist. Der zweite Zwischenfördersteg 25 erstreckt sich parallel zu dem sich helixförmig erstreckenden zweiten Fördersteg 6, entlang der gedachten Schneckenlängsachse. Der zweite Zwischenfördersteg 25 unterteilt einen durch den zweiten Fördersteg 6 gebildeten zweiten Fördergang 26 wiederum in einen ersten Teilfördergang 29a und einen zweiten Teilfördergang 29b. Die Wellenzone 3 ist als übliche Wave-Zone ausgebildet und weist daher eine sich entlang des (zweiten) Förderganges 26 der Wellenzone 3 wellenförmig ändernde Gangtiefe auf. Der zweite Fördersteg 6 sowie der zweite Zwischenfördersteg 25 ändern folglich ihre radiale Höhe ebenfalls entlang des zweiten Förderganges 26 wellenartig, wobei der zweite Fördersteg 6 und der zweite Zwischenfördersteg 25 wechselweise ihre Funktion ändern und abschnittsweise als Fördersteg und als Barrieresteg dienen.

Axial (in Bezug auf die Schneckenlängsachse) zwischen der Aufschmelzzone 2 und der Wellenzone 3 ist die Mischzone 4 angeordnet. In dem ersten sowie zweiten Ausführungsbeispiel der Fign. 1 und 2 weist die Mischzone 4 keinen Fördersteg auf. Somit endet der erste Fördersteg 5 an einem der Mischzone 4 zugewandten Ende 7 der Aufschmelzzone 2. Auch der Zwischenfördersteg 22 endet an dem der Mischzone 4 zugewandten Ende 7 der Aufschmelzzone 2. Zudem beginnt der zweite Fördersteg 6 wiederum erst an einem der Mischzone 4 zugewandten Ende / Beginn 8 der Wellenzone 3. Auch der Zwischenfördersteg 25 beginnt erst an dem der Mischzone 4 zugewandten Ende 8 der Wellenzone 3. Somit ist in dieser Ausführung die Mischzone 4 stegfrei ausgeführt. Die Mischzone 4 weist daher keine länglichen Erhebungen / Stege auf, die sich helixförmig um zumindest einen Gewindegang / um mindestens 360° herum erstrecken.

In Fig. 1 ist weiterhin zu erkennen, dass in der Mischzone 4 mehrere hier lediglich schematisch angedeutete Mischabschnitte 9, 10 vorhanden sind, wobei diese Mischabschnitte 9, 10 prinzipiell, wie nachfolgend in Bezug auf die Fign. 6 und 8a bis 8h beschrieben, unterschiedlich ausgestaltet sein können.

Fig. 6 zeigt eine Mischzone 4 des ersten Ausführungsbeispiels, in der mehrere distributive Mischabschnitte 10 angeordnet sind. Diese distributiven Mischabschnitte 10 sind als separate Mischelemente ausgeführt und auf der Extruderschnecke 1 im Bereich der Mischzone 4 drehfest angebracht. Die (vier) distributiven Mischabschnitte 10 sind in axialer Richtung der Schneckenlängsachse beabstandet sowie nebeneinander angeordnet. Die distributiven Mischabschnitte 10 sind jeweils als eine Zahnscheibe 12 / Verzahnungsring ausgebildet. Die jeweilige Zahnscheibe 12 ist somit mit einem ringförmigen Grundkörper versehen, an dem mehrere (in einer Umfangsrichtung zueinander beabstandete) eine Außenverzahnung (Geradverzahnung) bildende Zähne 27 angebracht sind.

In Verbindung mit den Fign. 8a bis 8h ist erkennbar, dass diese Mischabschnitte 9, 10 jedoch auch prinzipiell unterschiedlich ausgeführt sein können. Die distributiven Mischabschnitte 10 können auch wie nachfolgend näher erläutert prinzipiell durch disperse Mischabschnitte 9 ersetzt werden oder zusätzlich zu diesen vorgesehen sein.

Im Vergleich zu Fig. 6, ist in Fig. 8a erkennbar, dass die distributiven Mischabschnitte 10 im Wesentlichen auch als eine unmittelbar / stoffeinteilig mit dem die Mischzone 4 ausbildenden (dritten) Schneckenabschnitt 11c der Extruderschnecke 1 ausgebildet sein können. Jeder Mischabschnitt 10 ist als eine Schrägverzahnung ausgebildet. Die Schrägverzahnung wird somit durch mehrere leistenförmige in Umfangsrichtung nebeneinander angeordnete integrale Erhebungen 15 an der Außenumfangsseite der Extruderschnecke 1 in der Mischzone 4 gebildet. Die jeweilige Erhebung 15 bildet wiederum einen Zahn 27 aus.

Während in Fig. 8a die gebildete Schrägverzahnung als Evolventenverzahnung ausgeführt ist, ist es gemäß Fig. 8b auch möglich, die Verzahnung nicht als Evolventenverzahnung auszuführen. Die distributiven Mischabschnitte 10 weisen jedoch wiederum parallel zueinander verlaufende Erhebungen 15 auf. Hinsichtlich der Erhebungen 15 sei darauf hingewiesen, dass diese sich um einen beschränkten Winkelbereich um die Außenumfangsseite der Extruderschnecke 1 herumerstrecken und jeweils keinen sich um 360° zu einem vollständigen Gewindegang erstreckenden Steg ausbilden.

In Zusammenhang mit Fig. 8c ist angedeutet, dass die distributiven Mischabschnitte 10 auch mehrere in Umfangsrichtung verteilte Mischstifte 13 aufweisen können. Die Mischstifte 13 sind in diesem Ausführungsbeispiel wiederum unmittelbar mit dem dritten Schneckenabschnitt 11c stoffeinteilig ausgeführt. Auch reicht es prinzipiell aus, den Mischabschnitt 10 mit nur einem Mischstift 13 auszustatten.

In Verbindung mit Fig. 8d ist der distributive Mischabschnitt 10 als eine Gruppe an in axialer Richtung sowie in Umfangsrichtung verteilter Rautenelemente 14/ rautenförmiger Erhebungen 15 ausgeführt. Auch die Rautenelemente 14 sind an der Außenumfangsseite der Extruderschnecke 1 stoffeinteilig ausgeformt.

In Verbindung mit den Fign. 8e bis 8h ist erkennbar, dass die distributiven Mischabschnitte 10 durch disperse Mischabschnitte 9 ersetzbar sind. In Fig. 8e ist der disperse Mischabschnitt 9 als ein Blisterringbereich / ein Blisterring 18 in der Mischzone 4 ausgebildet. Dieser Blisterringbereich 18 weist mehrere in Umfangsrichtung sowie in axialer Richtung der Extruderschnecke 1 verteilte kreisförmige Dellen / Ausnehmungen auf.

In den Fign. 8f und 8g sind weitere mögliche disperse Mischabschnitte 9 in Form von Scherspalten 16a, 16b veranschaulicht. In Fig. 8f sind mehrere erste Scherspalte 16 bildende Erhebungen 15 schräg verlaufend an der Außenumfangsseite der Extruderschnecke 1 angeordnet. In Fig. 8g ist eine mäanderförmiger zweite Scherspalte 16b veranschaulicht.

In Fig. 8h ist der disperse Mischabschnitt 9 als ein ringförmiger Keilspaltbereich 17 / ein Keilspaltelement ausgeführt.

Die verschiedenen Mischabschnitte 9 und 10, wie in den Fign. 8a bis 8h veranschaulicht, sind prinzipiell aus der US 6 136 246 A bekannt, weshalb die hierin weiteren zu diesen Mischabschnitten genannten Ausführungen als hierin integriert gelten.

Statt dem Einsatz der Zahnscheibe 12, ist es prinzipiell auch möglich, den distributiven Mischabschnitt 10 als eine Lochscheibe / gelochte Scheibe auszubilden. Die Lochscheibe ist bevorzugt als mehreren in Umfangsrichtung verteilte sowie axial verlaufende Durchgangslöcher aufweisende Scheibe ausgeformt und an der Extruderschnecke 1, auf gleiche Art wie die Zahnscheiben 12, befestigt.

Prinzipiell sei auch darauf hingewiesen, dass in weiteren Ausführungsbeispielen die verschiedenen Mischabschnitte, d.h. die dispersen sowie distributiven Mischabschnitte 9, 10 frei miteinander kombiniert, sowohl als separate Elemente als auch als einstückiges / integrales Element, werden können.

In Verbindung mit den Fign. 3 bis 5 ist dann eine weitere nicht beanspruchte Idee veranschaulicht. Die Extruderschnecken 1 der dritten bis fünften Ausführungsbeispiele der Fign. 3 bis 5 sind, wie bereits erwähnt, sofern nicht anders erwähnt gemäß der Extruderschnecke der Fig. 1 ausgestaltet, weshalb nachfolgend lediglich die Unterschiede hierzu aufgeführt sind. Wie in Fig. 3 zu erkennen, weist die Mischzone 4 nun ebenfalls einen Fördersteg (dritter Fördersteg) 20 auf. Auch der dritte Fördersteg 20 erstreckt sich helixartig / helixförmig / schneckenförmig entlang der gedachten Schneckenlängsachse. Die drei Förderstege 5, 6, 20 schließen axial unmittelbar aneinander an und gehen ineinander über. Die Mischzone 4 weist hinsichtlich ihres dritten Fördersteges 20, wie durch den Winkel β veranschaulicht, eine geringere Gangsteigung / Stegsteigung auf als die Aufschmelzzone 2, wie durch den Winkel α veranschaulicht, hinsichtlich ihres ersten Fördersteges 5. Zudem kann die Mischzone 4 auch hinsichtlich ihres dritten Fördersteges 20 eine geringere Gangsteigung / Stegsteigung aufweisen als die Wellenzone 3 hinsichtlich ihres zweiten Fördersteges 6. Der erste Fördersteg 5 kann, wie auch bereits in den Fig. 1 und 2 beispielshaft dargestellt, die gleiche Stegsteigung aufweisen wie der zweite Fördersteg 6. Es gibt jedoch auch Ausführungen, bei denen die Stegsteigung der Wellenzone 3 gleich der Stegsteigung der Mischzone 4 ist. Die Stegsteigungen der Wellenzone 3 sowie der Aufschmelzzone 2 kann in weiteren Ausführungen, nicht wie hier gezeigt zueinander gleich, sondern unterschiedlich voneinander gewählt werden.

In Fig. 3 ist die Aufschmelzzone 2, wie bereits in dem zweiten Ausführungsbeispiel umgesetzt, zweigängig (in weiteren Ausführungen dreigängig oder alternativ eingängig) sowie als übliche Kompressionszone ohne Barrieresteg ausgebildet. Somit ist die Aufschmelzzone 2 in diesem Ausführungsbeispiel nicht als Barrierezone, sondern als konventionelle Aufschmelzzone ausgebildet. Zudem ist die Mischzone 4 eingängig ausgeführt. Der dritte Fördersteg 20 bildet somit einen einzigen (dritten) Fördergang 30 aus. Die Mischzone 4 ist zudem gemäß dem dritten Ausführungsbeispiel ohne Mischabschnitte / mischabschnittsfrei ausgebildet.

Das vierte Ausführungsbeispiel gemäß Fig. 4 unterscheidet sich dann wiederum von dem dritten Ausführungsbeispiel dadurch, dass mehrere distributive Mischabschnitte 10 in der Mischzone 4 vorhanden sind. Die konkrete Ausbildung dieser Mischabschnitte 10 sowie die für diese Mischabschnitte 10 alternativ einsetzbaren Mischabschnitte 9, 10 sind wiederum den zuvor ausgeführten Erläuterungen hinsichtlich Fig.1 und den Fign. 6 und 8a bis 8h zu entnehmen.

Das fünfte Ausführungsbeispiel gemäß Fig. 5 unterscheidet sich dann wiederum von dem vierten Ausführungsbeispiel dadurch, dass der dritte Fördersteg 20 mehrere axiale Durchbrüche 21, die entlang des dritten Fördersteges 20 beabstandet eingebracht sind, aufweist. Die Durchbrüche 21 sind auch wiederum in Fig. 7 veranschaulicht. Die Durchbrüche 21 durchdringen den dritten Fördersteg 20 somit partiell in axialer Richtung der Extruderschnecke und dienen als Rückströmpassagen zwischen den durch den dritten Fördersteg 20 ausgebildeten Gewindegängen. Die Durchbrüche 21 sind als Schlitze oder Nuten ausgebildet.

In anderen Worten ausgedrückt, wird im Betrieb der erfindungsgemäßen Extrusionsvorrichtung das Feststoffbett vor dem Eintritt in die Wave-Zone (Wellenzone 3) auf eine möglichst kleine Partikelgröße zerkleinert, um die Aufschmelzleistung zu steigern. Zwischen dem konventionell aufschmelzenden Teil der Schnecke 1 in Form der Aufschmelzzone 2, egal ob als Barriere- oder Kompressionszone ausgebildet, welche eine ein- oder mehrgängige Ausführung aufweisen kann, und der Wave-Zone 3 ist eine Mischzone 4 platziert, die eine möglichst stärkere Zer- und Verteilung des Feststoffbetts und eine möglichst gute Durchmischung zwischen Feststoff und Schmelze erreicht. Es werden bewusst distributive und/oder disperse Mischelemente (Mischabschnitte) 9, 10 eingesetzt. Distributive Mischelemente 10 können u.a. Zahnscheiben 12, Lochscheiben, Mischstifte 13 und/oder Rautenelemente 14 sein. Als disperse Mischelemente 9 eignen sich in diesem Fall Scherspalte 16a, 16b, Blisterringe 18 und/oder Keilspalteelemente 17. Durch die Verwendung distributiver und disperser Mischelemente 9, 10 wird eine deutlich intensivere Durchmischung in der Mischzone 4 erreicht sowie eine stärkere Ver- und Zerteilung des Feststoffbetts. Dadurch wird die Partikelgröße des Restfeststoffs, die in die Wave-Zone 3 übergeben wird, deutlich verkleinert, weshalb die Wave-Zone 3 effizienter plastifiziert und so auch eine höhere Plastifizierleistung erreicht wird. Neben den Mischelementen 9, 10 können bevorzugt in der Mischzone 4 jegliche Stege entfernt werden, um einen freien Fluss der Schmelze bzw. eine freie Vermischung aus Schmelze und des Feststoffs zu ermöglichen. Durch den freien Fluss wird die Wirksamkeit der Mischelemente 9, 10 weiter gesteigert, da Querströmungen, die eine zusätzliche Durchmischung und Umverteilung bewirken, entstehen. Wenn ein Hauptsteg (dritter Fördersteg 20) in der Mischzone 4 vorhanden ist, dann ist die Gangsteigung kleiner oder gleich als in der vorangegangenen, konventionellen Aufschmelzzone 2. Mit der Reduktion der Steigung werden die Verweilzeiten in der Mischzone 4 erhöht und so eine bessere Mischwirkung erzielt. Die Mischzone 4 ist maximal eingängig ausgeführt, zum Teil auch ohne Steg 20. Zudem kann der Hauptsteg 20, wenn vorhanden, Durchbrüche 21 aufweisen, um eine bessere Mischwirkung zu erreichen.

### Bezugszeichenliste

- 1: Extruderschnecke
- 2: Aufschmelzzone
- 3: Wellenzone
- 4: Mischzone
- 5: erster Fördersteg
- 6: zweiter Fördersteg
- 7: Ende der Aufschmelzzone
- 8: Ende der Wellenzone
- 9: disperser Mischabschnitt
- 10: distributiver Mischabschnitt
- 11a: erster Schneckenabschnitt
- 11b: zweiter Schneckenabschnitt
- 11c: dritter Schneckenabschnitt
- 12: Zahnscheibe
- 13: Mischstift
- 14: Rautenelement
- 15: Erhebung
- 16a: erste Scherspalte
- 16b: zweite Scherspalte
- 17: Keilspaltbereich
- 18: Blisterringbereich
- 19: Barrieresteg
- 19a: erster Barrieresteg
- 19b: zweiter Barrieresteg
- 20: dritter Fördersteg
- 21: Durchbruch
- 22: Zwischenfördersteg / erster Zwischenfördersteg
- 23: erster Fördergang
- 24a: erster Teilfördergang
- 24b: zweiter Teilfördergang
- 25: zweiter Zwischenfördersteg
- 26: zweiter Fördergang
- 27: Zahn
- 28: Schneckenlängsachse
- 29a: erster Teilfördergang
- 29b: zweiter Teilfördergang
- 30: dritter Fördergang

## Patentansprüche

1. Extruderschnecke (1) zum Plastifizieren von zumindest einem Kunststoff oder einem Kunststoffgemisch, mit
a) einer Aufschmelzzone (2),
b) einer Wellenzone (3)
c) sowie einer zwischen der Aufschmelzzone (2) und der Wellenzone (3), in direktem Anschluss an die Aufschmelzzone (2) angeordneten Mischzone (4), wobei
d) in der Aufschmelzzone (2) sowie in der Wellenzone (3) ein sich helixartig entlang einer Schneckenlängsachse erstreckender Fördersteg (5, 6) ausgebildet ist,
e) der Fördersteg (5) der Aufschmelzzone (2) an einem der Mischzone (4) zugewandten Ende (7) der Aufschmelzzone (2) endet und
f) der Fördersteg (6) der Wellenzone (3) an einem der Mischzone (4) zugewandten Ende (8) beginnt, die Extruderschnecke ist **dadurch gekennzeichnet, dass** g) eine Gangtiefe der Aufschmelzzone (2) entlang der Schneckenlängsachse zu der Mischzone (4) hin kontinuierlich abnimmt.

2. Extruderschnecke (1) nach Anspruch 1, **dadurch gekennzeichnet, dass** die Wellenzone (3) in direktem Anschluss an die Mischzone (4) angeordnet ist.

3. Extruderschnecke (1) nach Anspruch 1 oder 2, **dadurch gekennzeichnet, dass** die Aufschmelzzone (2) mehrgängig ist.

4. Extruderschnecke (1) nach einem der Ansprüche 1 bis 3, **dadurch gekennzeichnet, dass** die Wellenzone (3) mehrgängig, vorzugsweise zweigängig, ist.

5. Extruderschnecke (1) nach einem der Ansprüche 1 bis 4, **dadurch gekennzeichnet, dass** die Aufschmelzzone (2) zumindest teilweise als eine Kompressionszone ausgebildet ist.

6. Extruderschnecke (1) nach einem der Ansprüche 1 bis 5, **dadurch gekennzeichnet, dass** die Mischzone (4) zumindest einen eine distributive und/oder disperse Vermischung eines Feststoffanteils mit einem plastifizierten Anteil des zumindest einen Kunststoffes oder Kunststoffgemisches fördernden Mischabschnitt (9, 10) aufweist.

7. Extruderschnecke (1) nach Anspruch 6, **dadurch gekennzeichnet, dass** der zumindest eine Mischabschnitt (9, 10) stoffeinteilig mit einem die Mischzone (4) ausbildenden Schneckenabschnitt (11c) oder separat zu dem die Mischzone (4) ausbildenden Schneckenabschnitt (11c) ausgebildet ist

8. Extruderschnecke (1) nach Anspruch 6 oder 7, **dadurch gekennzeichnet, dass** der zumindest eine Mischabschnitt (10) als eine Zahnscheibe (12), eine Lochscheibe, ein Mischstift (13), oder ein Rautenelement (14) ausgebildet ist oder eine leistenförmige Erhebung (15) aufweist.

9. Extruderschnecke (1) nach Anspruch 6 oder 7, **dadurch gekennzeichnet, dass** der zumindest eine Mischabschnitt (9) als eine Scherspalte (16a, 16b), ein Blisterring (18) oder ein Keilspaltbereich (17) ausgebildet ist.

10. Extruderschnecke (1) nach einem der Ansprüche 1 bis 9, **dadurch gekennzeichnet, dass** die Aufschmelzzone (2) zumindest teilweise als eine Barrierezone ausgebildet ist, wobei neben dem Fördersteg (5) ein Barrieresteg (19) vorhanden ist, der eine geringere radiale Höhe aufweist als der Fördersteg (5).

11. Extrusionsvorrichtung mit einer Extruderschnecke (1) nach einem der Ansprüche 1 bis 10.

12. Verfahren zum Plastifizieren zumindest eines Kunststoffs oder eines Kunststoffgemisches mittels der Extrusionsvorrichtung nach Anspruch 11.

## Claims

1. An extruder screw (1) for the plasticizing of at least one plastic or a plastic mixture, with
a) a melting zone (2),
b) a wave zone (3)
c) and a mixing zone (4) arranged between the melting zone (2) and the wave zone (3), in direct connection to the melting zone (2),
wherein
d) a conveying web (5, 6) extending in a helix-like manner along a screw longitudinal axis is formed in the melting zone (2) and in the wave zone (3),
e) the conveying web (5) of the melting zone (2) terminates at an end (7) of the melting zone (2) facing the mixing zone (4), and
f) the conveying web (6) of the wave zone (3) begins at an end (8) facing the mixing zone (4), the extruder screw is **characterized in that**
g) a flight depth of the melting zone (2) decreases continuously along the longitudinal axis of the screw towards the mixing zone (4).

2. The extruder screw (1) according to Claim 1, **characterized in that** the wave zone (3) is arranged in direct connection to the mixing zone (4).

3. The extruder screw (1) according to Claim 1 or 2, **characterized in that** the melting zone (2) is multi-threaded.

4. The extruder screw (1) according to one of Claims 1 to 3, **characterized in that** the wave zone (3) is multi-threaded, preferably double-threaded.

5. The extruder screw (1) according to one of Claims 1 to 4, **characterized in that** the melting zone (2) is configured at least partially as a compression zone.

6. The extruder screw (1) according to one of Claims 1 to 5, **characterized in that** the mixing zone (4) has at least one mixing section (9, 10) promoting a distributive and/or disperse mixing of a solid material component with a plasticized component of the at least one plastic or plastic mixture.

7. The extruder screw (1) according to Claim 6, **characterized in that** the at least one mixing section (9, 10) is configured in one piece with regard to material with a screw section (11c) forming the mixing zone (4), or is configured separately to the screw section (11c) forming the mixing zone (4).

8. The extruder screw (1) according to Claim 6 or 7, **characterized in that** the at least one mixing section (10) is configured as a toothed disc (12), a perforated disc, a mixing pin (13), or a rhombic element (14), or has a strip-shaped elevation (15).

9. The extruder screw (1) according to Claim 6 or 7, **characterized in that** the at least one mixing section (9) is configured as a shear gap (16a, 16b), a blister ring (18) or a wedge gap region (17).

10. The extruder screw (1) according to one of Claims 1 to 9, **characterized in that** the melting zone (2) is configured at least partially as a barrier zone, wherein in addition to the conveying web (5) a barrier web (19) is present, which has a smaller radial height than the conveying web (5).

11. An extrusion device with an extruder screw (1) according to one of Claims 1 to 10.

12. A method for plasticizing at least one plastic or a plastic mixture by means of the extrusion device according to Claim 11.

## Revendications

1. Vis d'extrusion (1) pour la plastification d'au moins une matière plastique ou d'un mélange de matières plastiques, comprenant
a) une zone de fusion (2),
b) une zone d'ondulations (3),
c) ainsi qu'une zone de mélange (4) disposée entre la zone de fusion (2) et la zone d'ondulations (3) en raccord direct avec la zone de fusion (2), dans laquelle
d) dans la zone de fusion (2) ainsi que dans la zone d'ondulations (3), une barre d'avancement (5, 6) est formée, s'étendant en forme d'hélice le long d'un axe de vis,
e) la barre d'avancement (5) de la zone de fusion (2) termine sur une extrémité (7) de la zone de fusion (2) tournée vers la zone de mélange (4) et
f) la barre d'avancement (6) de la zone d'ondulations (3) commence à une extrémité (8) tournée vers la zone de mélange (4), la vis d'extrusion est **caractérisée en ce que**
g) une profondeur de spire de la zone de fusion (2) le long de l'axe de vis décroît continuellement en direction de la zone de mélange (4).

2. Vis d'extrusion (1) selon la revendication 1, **caractérisée en ce que** la zone d'extrusion (3) est disposée en raccord direct avec la zone de mélange (4) .

3. Vis d'extrusion (1) selon la revendication 1 ou 2, **caractérisée en ce que** la zone de fusion (2) est multi-spires.

4. Vis d'extrusion (1) selon l'une des revendications 1 à 3, **caractérisée en ce que** la zone d'ondulations (3) est multi-spires, de préférence à deux spires.

5. Vis d'extrusion (1) selon l'une des revendications 1 à 4, **caractérisée en ce que** la zone de fusion (2) est conçue en tant que zone de compression, au moins partiellement.

6. Vis d'extrusion (1) selon l'une des revendications 1 à 5, **caractérisée en ce que** la zone de mélange (4) présente au moins un tronçon de mélange (9, 10) transportant un mélange distributif et/ou dispersé d'une partie de solides avec une partie plastifiée de l'au moins une matière plastique ou mélange de matières plastiques.

7. Vis d'extrusion (1) selon la revendication 6, **caractérisée en ce que** l'au moins un tronçon de mélange (9, 10) est conçu d'un seul corps de matière avec un tronçon de vis (11c) formant la zone de mélange (4) ou séparément du tronçon de vis (11c) formant la zone de mélange (4).

8. Vis d'extrusion (1) selon la revendication 6 ou 7, **caractérisée en ce que** l'au moins un tronçon de mélange (10) est conçu en tant qu'un disque denté (12), un disque à trous, une tige de mélange (13) ou un élément en losanges (14) ou présente une protubérance en forme de baguette (15).

9. Vis d'extrusion (1) selon la revendication 6 ou 7, **caractérisée en ce que** l'au moins un tronçon de mélange (9) est conçu en tant qu'une fente de cisaillement (16a, 16b), une bague à blisters (18) ou une zone à fente conique (17).

10. Vis d'extrusion (1) selon la revendication 1 à 9, **caractérisée en ce que** la zone de fusion (2) est conçue en tant que zone barrière, au moins partiellement, dans laquelle, une barre barrière (19) est présente à côté de la barre d'avancement (5), qui présente une hauteur radiale plus faible que la barre d'avancement (5).

11. Dispositif d'extrusion comprenant une vis d'extrusion (1) selon l'une des revendications 1 à 10.

12. Procédé de plastification d'au moins une matière plastique ou d'un mélange de matières plastiques selon la revendication 11.
